# EUROPEAN PATENT APPLICATION

(11) **EP 2 738 201 A1**
(43) Date of publication of application: **04.06.2014**
(21) Application number: 12818446.2
(22) Date of filing: 26.07.2012
(51) Int. Cl.: C08J 3/12, B29B 9/04

(54) **METHOD FOR PRODUCING FINE PARTICLES**

(30) Priority: 26.07.2011 JP 2011163578
(71) Applicant: Niigata University, Niigata 950-2181 (JP); Sekisui Chemical Co., Ltd., Osaka-shi, Osaka 530-0047 (JP)
(72) Inventor: TANAKA Masato, Niigata-shi Niigata 950-2181 (JP); OOMURA Takahiro, Mishima-gun Osaka 618-0021 (JP)
(74) Representative: Hart-Davis, Jason
(86) International application number: PCT/JP2012/068943
(87) International publication number: WO 2013/015352

(57) **Abstract**

Provided is a method for producing fine particles in which fine particles having a uniform particle size distribution can be simply obtained with a low environmental load. The present invention relates to a method for producing fine particles including the step of preparing minute pieces by cutting a resin film at equal intervals into a width of 0.05 to 500 µm.

## Description

### TECHNICAL FIELD

The present invention relates to a method for producing fine particles.

### BACKGROUND ART

Fine particles made of a resin or the like can be caused to show various characteristics by changing their sizes from a nano order size to a size of several tens µm. Such fine particles are used, for example, as a resin additive, a cosmetic preparation, an ink, a toner, a molding material and a spacer, and are industrially indispensable.

As conventional methods for producing fine particles, emulsion polymerization, suspension polymerization, dispersion polymerization and the like are known. In the emulsion polymerization, a hydrophobic monomer is dispersed in water to be polymerized in the presence of a surface active agent and a polymerization initiator. Since the inside of a micelle of the surface active agent is hydrophobic, the polymerization proceeds within the micelle, so that resin fine particles with a particle size not larger than a submicron size can be thus obtained.

In the suspension polymerization, a hydrophobic monomer is suspended by mechanical stirring, so as to change droplets directly into resin particles, and resin fine particles with a size of several µm to several tens µm can be thus obtained.

The dispersion polymerization is a method that can be designated as a soap-free emulsion polymerization performed in an organic solvent, and is suitably employed for obtaining resin fine particles with a particle size from a submicron size to a several µm size.

On the other hand, a method for producing fine resin particles by a supercritical jet method is being studied in recent years. This technique is designated as RESS (Rapid Expansion of Supercritical Solution), and for example, Patent Literature 1 discloses a technique in which resin fine particles are obtained by dissolving a resin in supercritical carbon dioxide and then rapidly jetting the resin under atmospheric pressure to precipitate resin fine particles.

However, the conventional methods such as the emulsion polymerization, the dispersion polymerization and the suspension polymerization are, methods in which resin fine particles are obtained in water or an organic solvent, and hence, it is necessary to evaporate the dispersion medium for obtaining a dry powder, which not only makes the process complicated but also leads to a fear of increase of environmental load.

Furthermore, in the conventional methods, it is difficult to produce fine particles with a uniform particle size distribution.

On the other hand, the technique of producing fine resin particles by the supercritical jet method (RESS) has advantages that there is no need to perform a drying process and the environmental load is low because supercritical carbon dioxide is used. However, it is necessary to dissolve a precedently-polymerized polymer in supercritical carbon dioxide, and since a polymer generally has low solubility in supercritical carbon dioxide, the RESS has a problem in productivity.

Alternatively, as a synthesizing method for fine particles not employing polymerization, a technique, as described in Patent Literature 2, in which fine particles are obtained by spraying a solution containing a polymer into a hot air so as to dry and solidify the polymer present in droplets (a spray drying method) may be employed. Such a method has, however, problems of increase of the environmental load as well as increase of energy load because a large amount of hot air is necessary.

### CITATION LIST

### - Patent Literature

Patent Literature 1: Japanese Kokai Publication No. 2005-239915 A
Patent Literature 2: Japanese Kokai Publication No. 2011-105953 A

### SUMMARY OF INVENTION

### - Technical Problem

As a result of various studies made for solving the aforementioned problems, it has been found that fine particles with a uniform particle size distribution can be simply obtained with a low environmental load by performing a step of preparing minute pieces by cutting a resin film at equal intervals into a prescribed width, and thus, the present invention has been accomplished.

### - Solution to Problem

A method for producing fine particles of the present invention includes a step of preparing minute pieces by cutting a resin film at equal intervals into a width of 0.05 to 500 µm.

### - Advantageous Effects of Invention

The present invention provides a method for producing fine particles in which fine particles having an arbitrarily controllable particle size and having a uniform particle size distribution can be simply obtained with a low environmental load.

Furthermore, the present invention provides a method for producing composite fine particles having heterogeneous surfaces in which there is high productivity, no restriction in a foreign substance addable for developing functions and the foreign substance may be embraced in each sphere center of the composite fine particles.

### BRIEF DESCRIPTION OF DRAWINGS

Figure 1 is a schematic diagram illustrating an example of a method for producing fine particles of the present invention.
Figure 2 is a schematic diagram illustrating another example of the method for producing fine particles of the present invention.
Figure 3 is a flowchart illustrating a method for producing composite fine particles having heterogeneous surfaces of the present invention.
Figure 4 is a schematic diagram illustrating a method for producing composite fine particles having a three-layered structure.
Figure 5 is a schematic diagram illustrating a production method of Example 4.

### DESCRIPTION OF EMBODIMENTS

A method for producing fine particles of the present invention is described below.

The method for producing fine particles of the present invention includes a step of preparing minute pieces by cutting a resin film at equal intervals into a width of 0.05 to 500 µm.

As the resin film, a single-layered film or a composite film having two or more layers may be used, and a composite film is preferably used.

When the composite film is used, composite fine particles having heterogeneous surfaces can be produced.

As a method for producing the composite fine particles having the heterogeneous hemispherical surfaces, methods designated as a microreactor method and a nozzle method are known as described in Japanese Kohyo Publication No. 2001-500172T. In these methods, two droplets respectively formed at tips of different nozzles are combined, or two droplets are combined in a microchannel within a microreactor. However, these methods have the following problems: (i) The productivity is extremely low; (ii) it is difficult to establish a stable operation because interface conditions and flow conditions for combining two droplets into one droplet are complicated; (iii) there is a limit in a controllable range of a particle size because the droplets are formed by using a nozzle or a microchannel; (iv) since droplets are formed by using a nozzle or a microchannel, there is a restriction in a foreign substance addable for developing functions, and in particular, a solid powder cannot be added because it blocks the nozzle or the microchannel; and (v) it is impossible to allow a foreign substance to be embraced in each sphere center of the composite fine particles.

However, these problems (i) to (v) can be overcome by employing the present method.

The aforementioned composite fine particles can be provided with different properties in respective hemispherical portions, and therefore, for example, fine particles having one hemispherical surface in black and the other hemispherical surface in white, namely, what is called a black and white pole, can be used for making a display. Alternatively, composite fine particles having hydrophilicity on one hemispherical surface and hydrophobicity on the other hemispherical surface can be used as surface active particles working as a stabilizer for a dispersion system, or can be used also as a component of composite fine particles.

The resin film may be one obtained by applying a paste containing a polymer to a substrate and drying the applied paste, or one obtained by applying a paste containing a polymerizable monomer to a substrate and causing a polymerization reaction of the monomer.

Preferable examples of the composite film include:
(a) one obtained by applying a paste containing a polymerizable monomer to a substrate resin film and causing a polymerization reaction of the monomer;
(b) one obtained by applying a paste containing a polymer to a substrate resin film and drying the paste; and
(c) one obtained by individually preparing two or more layer films and adhering the layer films to each other.

As a method for obtaining the composite film (c), for example, the following methods are preferably employed:
(c1) A method in which two or more layer films composed of one or more layer resin films and one or more precursor films containing a polymerizable monomer are prepared, the respective layer films are adhered to each other, and a polymerization reaction is caused therein; and
(c2) a method in which two or more layer films composed of one or more layer resin films and one or more solvent-containing films containing an organic solvent are prepared, the respective layer films are adhered to each other, and the resulting films are dried.

These methods are appropriately selected in accordance with the properties of used raw materials. For example, if a polymerizable monomer is used, a rigid adhesion interface can be formed by causing polymerization after adhering films, and hence, the method (c1) is preferably employed, and if a naturally derived polymer is used as the raw material, the method (c2) is preferably employed.

As a method for preparing the precursor film used in the method (c1), for example, the following methods are preferably employed:
(c1-1) A method in which a paste containing a polymer, a polymerizable monomer and an organic solvent is applied, and the organic solvent is dried; and
(c1-2) a method in which a paste containing two different polymerizable monomers is applied, and one of the polymerizable monomers is polymerized.

Furthermore, as a method for preparing the solvent-containing film used in the method (c2), for example, the following method is preferably employed:
(c2-1) a method in which a paste containing a polymerizable monomer and an organic solvent is applied, and a polymerization reaction is caused therein.
These methods are also appropriately selected in accordance with the properties of used raw materials similarly to the methods described above.

Examples of the polymer include thermoplastic resins such as poly(meth)acrylate, polystyrene, polyvinyl chloride, polyvinylidene chloride, polyvinyl acetate, polyvinyl alcohol, polyvinyl acetal, polyethylene, polypropylene, polyamide, polyacetal, polycarbonate, saturated polyester and polylactic acid; thermosetting resins such as polyurethane, unsaturated polyester, polyimide, a phenol resin, a urea resin, a melamine resin, a diallyl phthalate resin, an epoxy resin and a silicon resin; and polymer compounds derived from natural products such as cellulose, polysaccharides, various fatty acid esters, gelatin and protein.

Examples of the polymerizable monomer include addition polymerizable monomers such as (meth) acrylate, styrene derivatives, vinyl chloride, vinylidene chloride, vinyl acetate, ethylene and propylene; and polycondensation/polyaddition polymerizable monomers such as caprolactam, dicarboxylic acid and diamine, ether and carboxylic acid, lactic acid, alkoxysilane, a urethane monomer and an epoxy monomer.

The paste containing the polymerizable monomer preferably contains, in addition to the polymerizable monomer, an organic solvent, water, a viscosity modifier, a surface tension adjuster and the like.

Furthermore, the paste containing the polymerizable monomer may contain a substance having properties of coloring, an electrostatic property, a conductive property, a heat conducting property, a functional group, a magnetic property or the like.

Examples of a method for applying the paste containing the polymerizable monomer include a cast method, a bar coating method, a spin coating method, a dipping method and an ink-jet method.

Furthermore, if the paste containing the polymerizable monomer contains a substance having an ion exchange gelation ability or a crosslinking function, the paste is preferably gelled.

On the resin film, a core material is preferably disposed at equal intervals.

If the resin film is a composite film, the core material is preferably disposed at equal intervals between layers.

When the core material is disposed at equal intervals, for example, a microcapsule having heterogeneous spherical surfaces or a cylindrical microcapsule can be prepared.

Examples of the core material include a pharmaceutical preparation, a curing agent, a catalyst, an agricultural chemical, a perfume and a foaming agent. Specific examples include silver particles and an ascorbic acid aqueous solution.

The resin film has a thickness of preferably 0.05 to 1000 µm.

If the thickness is smaller than 0.05 µm, the strength of the film is so low that it may be difficult to peel off from a substrate after cutting in some cases, and if the thickness exceeds 1000 µm, the strength of the film is so high that it is difficult to precisely cut. The thickness is more preferably 0.15 to 100 µm.

According to the present invention, the resin film is cut at equal intervals into a width of 0.05 to 500 µm.

If the cut width is smaller than 0.05 µm, the uniformity in the particle size of the obtained fine particles is degraded even when a precise cutting machine such as a laser is used, and if it exceeds 500 µm, the dispersibility and the powder fluidity of the obtained fine particles are degraded. The lower limit of the cut width is preferably 0.15 µm and the upper limit thereof is preferably 100 µm.

Incidentally, as a cutting method, the resin film may be cut along the lengthwise direction thereof at equal intervals or along an orthogonal direction to the lengthwise direction thereof at equal intervals. Alternatively, the resin film may be cut to have a cut surface in a square shape or in a rectangular or circular shape.

Furthermore, after cutting the resin film at equal intervals into the width of 0.05 to 500 µm, the cut resin film may be further cut along an orthogonal direction to the cut surface.

The shape of minute pieces obtained by cutting the resin film is not especially limited, and examples of the shape include a cube shape, a substantially cube shape, a square pole shape, a substantially square pole shape and a cylindrical shape.

As a method for cutting the resin film, for example, conventionally known laser-type cutting machines, fine cutting machines and the like may be used. In particular, an excimer laser-type precise cutting machine is preferably used.

In the method for producing fine particles of the present invention, the resin film is preferably cut so as to have the core material positioned in the center of each minute piece. Thus, a microcapsule having a uniform shell film thickness and a high retaining property for the core material can be obtained.

In the method for producing fine particles of the present invention, after the step of preparing minute pieces, a step of melting the minute pieces is preferably performed.

Examples of a method for melting the minute pieces include a method in which the minute pieces are melted by heating to a temperature exceeding the melting point of a resin constituting the resin film, and a method in which the minute pieces are added and melted in a solvent having no compatibility with a resin constituting the resin film.

Incidentally, after melting the minute pieces into a spherical shape, polymerization, drying or gelation may be further continued. In particular, if the resin film is a composite film, time of a polymerization reaction performed before preparing the resin film and time of a polymerization reaction performed after preparing the resin film are adjusted, so as to prevent peeling of the composite film and to efficiently prepare composite fine particles having good heterogeneous hemispherical surfaces.

If the method in which the minute pieces are added and melted in a solvent having no compatibility with the resin constituting the resin film is employed, for example, ethylene glycol or the like can be used as the solvent. Furthermore, polyvinyl alcohol, tricalcium phosphate or the like may be added.

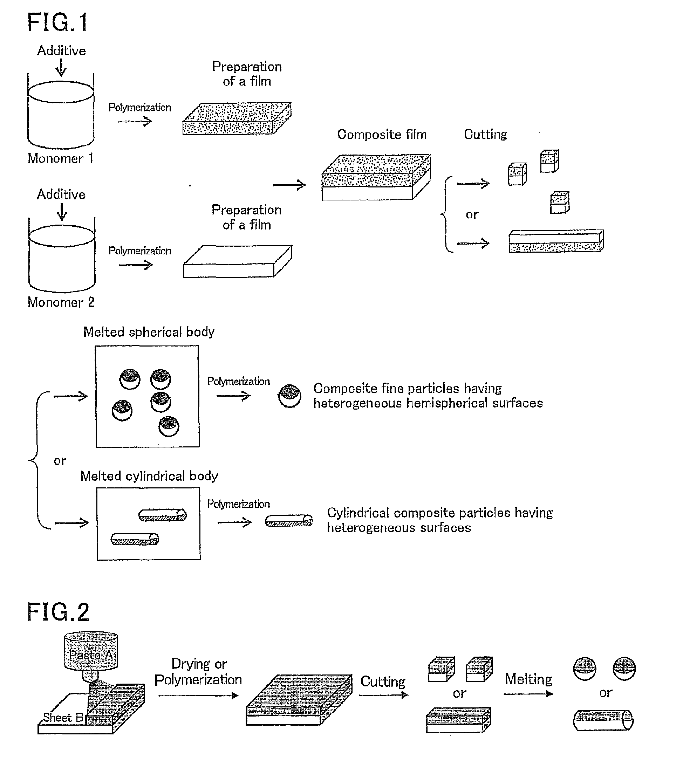

An example of the method for producing fine particles of the present invention is illustrated in Figure 1. Incidentally, Figure 1 illustrates a case where composite fine particles having heterogeneous hemispherical surfaces are prepared by using a composite film.

A method for producing the composite fine particles having two heterogeneous hemispherical surfaces includes the steps of preparing a solution by dissolving or dispersing a substance developing functions in a polymerizable monomer, water or a solvent such as an organic solvent; preparing a film by performing polymerization, drying or gelation in the solution; adhering two films to each other and performing polymerization, drying or gelation; cutting a composite film obtained by combining the films; and melting minute pieces into a spherical shape in a solvent and performing polymerization, drying or gelation. These steps are extremely simple and can be easily constructed as a series of processes, and therefore, the composite fine particles having desired heterogeneous hemispherical surfaces can be mass produced in high yield.

Alternatively, as illustrated in Figure 2, the composite film may be prepared by applying a solution obtained by dissolution or dispersion in a polymerizable monomer, water or a solvent such as an organic solvent to a sheet and by performing drying or polymerization in the resulting sheet.

Furthermore, the size of the composite fine particles is determined depending upon the thicknesses of the films and the cut dimension, and therefore, the particle size can be extremely easily controlled. For example, the particle size of the composite fine particles can be controlled in a range of 0.05 to 1000 µm. Particularly when a laser-type cutting machine is used, the cutting can be performed with high dimension accuracy, and therefore, composite fine particles having a monodisperse particle size distribution with a uniform particle size can be prepared. Furthermore, if the composite film is cut into a substantially cube shape, spherical composite fine particles can be obtained, and if the composite film is cut into a substantially square pole shape, cylindrical composite fine particles can be obtained.

Moreover, since films having different properties are individually prepared and combined with each other, respective hemispherical surfaces of resulting fine particles can be provided with a variety of functions.

Furthermore, before combining two films with each other, a third component corresponding to a core material is applied and coated on one of the films, or particles of the third component are placed at equal intervals on one of the films by a one-shot injection method such as the ink-jet method, and the composite film is cut so as to make the particles of the third component disposed in centers of the respective minute pieces, and thereafter, the minute pieces are melted. In this manner, the third component can be encapsulated in the center of each of the spherical composite fine particles. Here, when the injection amount of the third component is controlled by the one-shot injection method, the content of the third component in the composite fine particles can be uniformly and arbitrarily controlled. Furthermore, when this method is employed, the efficiency in encapsulating the third component can be 100%, and hence, this method is suitably used when the third component is expensive. Moreover, when the thickness of the film, the position of placing the third component and the position of cutting the film are controlled, a core-shell type microcapsule having concentric core and shell and having a uniform shell thickness can be easily prepared.

Furthermore, when the two films have the same thickness, heterogeneous hemispherical surfaces having a boundary on the equator of each spherical particle can be formed.

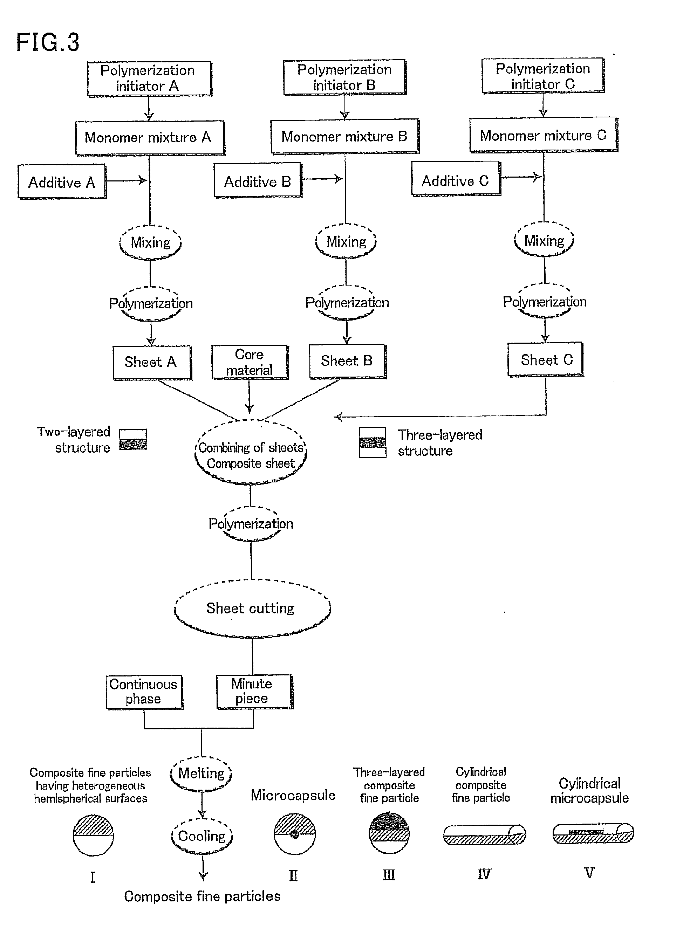

A method for producing composite fine particles having heterogeneous surfaces of the present invention is described below with reference to Figure 3 by exemplifying a case of using a polymerizable monomer. It is noted that a "film" is mentioned as a "sheet" in Figure 3. To monomer mixtures A, B and C each containing a polymerizable monomer, polymerization initiators A, B and C and additives A, B and C are respectively added, mixed and then performed polymerization for a prescribed period of time. The resulting respective monomer mixtures A, B and C are poured into Petri dishes and formed into sheets by the cast method, and furthermore, preliminary bulk polymerization is performed for a prescribed period of time, so as to obtain sheets A, B and C. Subsequently, these sheets are adhered to each other and polymerization is performed therein for a prescribed period of time, thereby preparing a composite sheet. Two sheets A and B can be prepared into a composite sheet of a two-layered structure, and three sheets A, B and C can be prepared into a composite sheet of a three-layered structure.

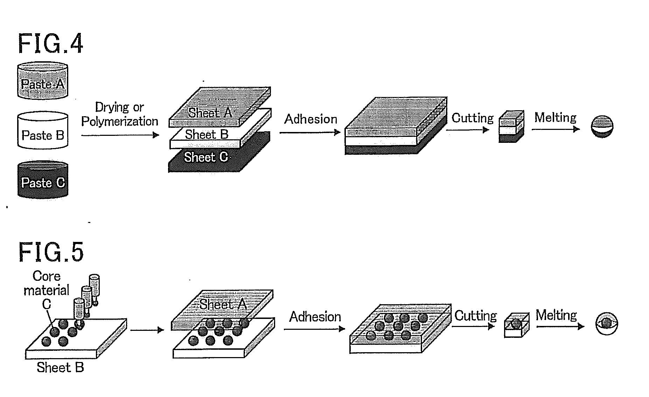

Additionally, the composite sheet is cut by a cutting machine into a desired size (sheet cutting) to obtain minute pieces, and the minute pieces are introduced into a continuous phase (for example, an aqueous phase of 80°C) to be melted and then cooled. Here, when the composite sheet of the two-layered structure is cut into a substantially cube shape, composite fine particles (I) having heterogeneous hemispherical surfaces can be prepared. When the composite sheet of the three-layered structure is cut into a substantially cube shape, composite fine particles (III) having a three-layered structure can be prepared. Incidentally, Figure 4 illustrates a case where the composite sheet of the three-layered structure is cut into a substantially cube shape for preparing composite fine particles having a three-layered structure.

When the composite sheet of the two-layered structure is cut into a substantially square pole shape, cylindrical composite fine particles (IV) can be prepared. Alternatively, when a core material is placed on one of the sheets before adhering the two sheets A and B to each other, a microcapsule (II) and a cylindrical microcapsule (V) having heterogeneous spherical surfaces can be prepared.

According to the method for producing composite fine particles having heterogeneous surfaces of the present invention, composite fine particles useful in fields of information recording materials (conducting property-insulating property, black-white, negatively charged-positively charged), stationary products (black-white), pharmaceutical preparations (negatively charged-positively charged, hydrophilic-hydrophobic) and adhesives/paints (magnetic property -nonmagnetic property, conducting property-insulating property, heat conducting property-non-heat conducting property) can be produced. Furthermore, when various core materials are embraced, the resulting composite fine particles are applicable in fields of agriculture, cosmetics, civil engineering and construction, food and the like. Particularly, according to the method for producing composite fine particles having heterogeneous surfaces of the present invention, composite fine particles having uniform quality and a high added value can be obtained.

The present invention is described in further details with reference to examples below; however, the present invention is not limited to these examples.

### (Example 1)

A mixed solution of 2.5 g of polymethyl methacrylate, 2.5 g of polyisobutyl methacrylate, 5 g of MEK (methyl ethyl ketone), 5 g of butanol and 0.01 g of Neogen R (sodium dodecylbenzenesulfonate) used as a surface active agent was poured into a Petri dish and formed into a sheet by the cast method, thereby obtaining a sheet with a thickness of 50 µm.

Subsequently, the sheet was cut by using an excimer laser-type precise cutting machine (light source: ArF laser, wavelength: 193 nm) along lengthwise and widthwise directions orthogonally into a cut width of 50 µm (into a 50 µm square), and thus, minute pieces in a square pole shape with a size of 50 µm square were obtained.

The obtained minute pieces were introduced into a continuous phase at 80°C to be melted into a spherical shape. Here, the used continuous phase was 0.5 g of polyvinyl alcohol and 2.5 g of tricalcium phosphate dissolved in 100 g of ethylene glycol. The obtained particles had an average particle size of 55 µm and a CV value of 4%.

### (Comparative Example 1)

Particles were prepared in the same manner as in Example 1 except that minute pieces were prepared by grinding a sheet with a planetary ball mill (manufactured by Fritsch Japan Co., Ltd., P-7) instead of using the laser-type cutting machine. The obtained particles had an average particle size of 35 µm and a CV value of 112%.

### (Comparative Example 2)

A mixed solution of 2.5 g of polymethyl methacrylate, 2.5 g of polyisobutyl methacrylate, 25 g of MEK (methyl ethyl ketone) and 25 g of butanol was dried and powdered by using a laboratory spray dryer (manufactured by Nihon Buchi K.K., B-290). The obtained particles had an average particle size of 30 µm and a CV value of 45%.

### (Example 2)

### [Production of black-white fine particles]

Composite fine particles were produced in accordance with the flowchart of Figure 2 by using 5 g of a mixture of styrene and ethyl hexyl acrylate as monomer mixtures A and B, 0.5 g of AIBN (azobisisobutyronitrile) as polymerization initiators A and B, 0.6 g of a titanium dioxide (TiO₂) powder of a white pigment as an additive A, 0.5 g of a magnetite (Fe₃O₄) powder of a black pigment as an additive B, 10 g of MEK as a solvent to be added to each of the monomer mixtures A and B, and 0.05 g of Span 80 (sorbitan monooleate) as a surface active agent to be added to each of the monomer mixtures A and B.

The polymerization initiator A, the additive A and the surface active agent were added to and mixed with the monomer mixture A, and preliminary bulk polymerization was performed for a prescribed period of time. Thereafter, the resulting mixed monomer was poured into a Petri dish and formed into a film by the cast method, and the preliminary bulk polymerization was further continued, thereby obtaining a sheet A. The sheet A had a thickness of 110 µm. Similarly, the polymerization initiator B, the additive B and the surface active agent were added to and mixed with the monomer mixture B, and preliminary bulk polymerization was performed for a prescribed period of time. Thereafter, the resulting mixed monomer was poured into a Petri dish and formed into a film by the cast method, and the preliminary bulk polymerization was further continued, thereby obtaining a sheet B. The sheet B had a thickness of 130 µm.

After completing the polymerization, the two films, that is, the sheets A and B, were adhered to each other, and thermal polymerization was performed for 30 minutes, thereby preparing a composite film with a thickness of 210 µm.

Subsequently, the composite film was cut by using an excimer laser-type precise cutting machine along lengthwise and widthwise directions orthogonally into a cut width of 150 µm (into a 150 µm square), and thus, minute pieces in a square pole shape with a size of 150 µm square were obtained. The obtained minute pieces were introduced into a continuous phase at 80°C to be melted into a spherical shape. Here, the used continuous phase was 0.5 g of polyvinyl alcohol and 2.5 g of tricalcium phosphate dissolved in 100 g of ethylene glycol.

Thereafter, the polymerization was continued for consuming the remaining monomer, followed by cooling. In this manner, two-color composite fine particles having one hemisphere in black and the other hemisphere in white, and having an average particle size of 170 µm and a CV value of 5% were obtained.

### (Example 3)

A sheet A was prepared in the same manner as in Example 2 except that a mixed monomer was spin coated on glass and then preliminarily polymerized. The obtained sheet A had a thickness of 0.10 µm. A mixed monomer of the monomer mixture B similar to that obtained in Example 2 was spin coated on the sheet A, and thermal polymerization was performed for 10 minutes, thereby obtaining a composite sheet with a thickness of 0.19 µm.

This composite film was cut by using an excimer laser-type precise cutting machine along lengthwise and widthwise directions orthogonally into a cut width of 0.15 µm (into a 0.15 µm square), and thus, minute pieces in a square pole shape with a size of 0.15 µm square were obtained. The obtained minute pieces were introduced into a continuous phase at 80°C to be melted into a spherical shape. Here, the used continuous phase was 0.5 g of polyvinyl alcohol and 2.5 g of tricalcium phosphate dissolved in 100 g of ethylene glycol.

Thereafter, the polymerization was continued for consuming the remaining monomer, followed by cooling. In this manner, two-color composite fine particles having one hemisphere in black and the other hemisphere in white, and having an average particle size of 0.16 µm and a CV value of 10% were obtained.

### (Comparative Example 3)

Particles were prepared in the same manner as in Example 2 except that the composite film was cut by using an excimer laser-type precise cutting machine along lengthwise and widthwise directions orthogonally into a cut width of 1500 µm (into a 1500 µm square), thereby obtaining minute pieces in a square pole shape with a size of 1500 µm square. However, particles obtained after the cooling were still in a flat shape, and the obtained powder had extremely poor fluidity. Incidentally, the particles had an average particle size of 450 µm and a CV value of 135%.

### (Comparative Example 4)

Particles were prepared in the same manner as in Example 3 except that minute pieces were obtained by cutting the composite film by using an excimer laser-type precise cutting machine into a cut width of 0.04 µm (into a 0.04 µm square).

However, when particles obtained after the cooling were observed, the two-color structure was unclear in some particles. Incidentally, the particles had an average particle size of 0.06 µm and a CV value of 63%.

### (Example 4)

### [Production of microcapsule-type fine particles]

Composite fine particles were produced in accordance with the flowchart of Figure 3 and as illustrated in Figure 5 by using 5 g of a mixture of a styrene monomer and ethyl hexyl acrylate as monomer mixtures A and B, 0.5 g of AIBN (azobisisobutyronitrile) as polymerization initiators A and B, silver particles as a core material C and 0.05 g of Span 80 (sorbitan monooleate) as a surface active agent to be added to each of the monomer mixtures A and B.

An operation was performed in the same manner as in Example 2 up to the preparation of sheets A and B. However, the cast method was performed so that each of the sheets A and B could attain a thickness of 15 µm. In addition, silver particles with a particle size of 3 µm were placed on the sheet A at equal intervals of 25 µm correspondingly to the intervals for cutting the sheet by a cutting machine. Thereafter, the two films, that is, the sheets A and B, were adhered to each other and polymerization was performed for 60 minutes, and the obtained composite film was cut by using an excimer laser-type precise cutting machine along lengthwise and widthwise directions orthogonally into a cut width of 25 µm (into a 25 µm square), and thus, minute pieces in a square pole shape with a size of 25 µm square were obtained. The obtained minute pieces were introduced into a continuous phase at 80°C to be melted into a spherical shape. Here, the used continuous phase was 0.5 g of polyvinyl alcohol and 2.5 g of tricalcium phosphate dissolved in 100 g of ethylene glycol. At this point, no silver particles were observed to come off from the composite film into the continuous phase.

Thereafter, the polymerization was continued for consuming the remaining monomer, followed by cooling, thereby obtaining composite fine particles in the form of a microcapsule embracing a core material of the silver particles in the center and having an average particle size of 26 µm and a CV value of 8%.

### (Example 5)

Microcapsule-type particles were prepared in the same manner as in Example 4 except that the silver particles used as the core material were placed at ununiform intervals of 5 to 30 µm. As a result, the silver particles were not always positioned only in the center of each capsule, and when the particles were changed into a spherical shape, silver particles coming off from the composite film into the continuous phase were observed.

### (Example 6)

Microcapsule-type particles were prepared in the same manner as in Example 4 except that the silver particles used as the core material were placed at equal intervals of 15 µm. As a result, the silver particles were not always positioned in the center of each capsule, and when the particles were changed into a spherical shape, silver particles coming off from the composite film into the continuous phase were observed.

### (Example 7)

### [Production of (hydrophilic-hydrophobic) amphipathic fine particles]

Composite fine particles were produced in accordance with the flowchart of Figure 3 by using 5.0 g of styrene as a hydrophobic monomer mixture A, 5.0 g of 2-hydroxyethyl methacrylate as a hydrophilic monomer mixture B, 0.1 g of a titanium dioxide (TiO₂) powder of a white pigment as an additive A, 0.1 g of a magnetite (Fe₃O₄) powder of a black pigment as an additive B, 0.5 g of AIBN (azobisisobutyronitrile) as polymerization initiators A and B, 10 g of MEK as a solvent to be added to each of the monomer mixtures A and B, and 0.05 g of Span 80 (sorbitan monooleate) as a surface active agent to be added to each of the monomer mixtures A and B.

Specifically, the polymerization initiator A, the solvent and the surface active agent were added to and mixed with the monomer mixture A, and polymerization was performed at 70°C for a prescribed period of time. Thereafter, the obtained polymer solution was poured into a Petri dish and formed into a film with the solvent dried by the cast method, thereby obtaining a hydrophobic sheet A. The sheet A had a thickness of 23 µm. Similarly, the polymerization initiator B, the solvent and the surface active agent were added to and mixed with the monomer mixture B, and polymerization was performed at 70°C for a prescribed period of time. Thereafter, the obtained polymer solution was poured onto the sheet A in the Petri dish and formed into a film by the cast method, thereby stacking a sheet B on the sheet A so as to prepare a composite film with a thickness of 43 µm. A portion corresponding to the sheet B had a thickness of 20 µm.

Subsequently, the composite film was cut by using an excimer laser-type precise cutting machine along lengthwise and widthwise directions orthogonally into a cut width of 100 µm (into a 100 µm square), and thus, minute pieces in a square pole shape with a size of 100 µm square were obtained. The obtained minute pieces were introduced into a continuous phase at 80°C to be melted into a spherical shape. Here, the used continuous phase was 0.5 g of polyvinyl alcohol and 2.5 g of tricalcium phosphate dissolved in 100 g of water. Thereafter, the resultant was cooled, thereby obtaining two-color composite fine particles having one hemisphere in black and the other hemisphere in white, and having an average particle size of 41 µm and a CV value of 4%.

To a slurry obtained by dispersing these particles, 100 g of hexane was added, and the resultant was stirred. After allowing to stand still for 1 hour, the particles were observed to be locally present on an interface between water and hexane, with the white hydrophobic portion of each particle in contact with the hexane layer and with the black hydrophilic portion of each particle in contact with water, and thus, the obtained particles were confirmed as amphipathic particles.

### (Example 8)

### [Production of (hydrophilic-hydrophobic) amphipathic fine particles]

As a hydrophobic paste mixture A, 5.0 g of polystyrene, 0.1 g of a titanium dioxide (TiO₂) powder of a white pigment, 10 g of MEK as a solvent, and 0.05 g of Span 80 (sorbitan monooleate) as a surface active agent were used. The paste mixture A was poured into a Petri dish and formed into a film with the solvent dried at 70°C by the cast method, thereby obtaining a hydrophobic sheet A. The sheet A had a thickness of 53 µm.

On the other hand, as a hydrophilic paste mixture B, 5.0 g of hydroxypropyl methylcellulose (Metolose 60SH manufactured by Shin-Etsu Chemical Co., Ltd.), 0.1 g of a magnetite (Fe₃O₄) powder of a black pigment, 10 g of ion-exchanged water as a solvent, and 0.05 g of Span 80 (sorbitan monooleate) as a surface active agent were used. After pouring the paste mixture B into a Petri dish, the mixture was formed into a film with the solvent dried at 70°C by the cast method, thereby obtaining a hydrophilic sheet B. The sheet B had a thickness of 45 µm.

The two films, that is, the sheet A and the sheet B, were adhered to each other and pressed at a pressure of 10 kN, thereby preparing a composite film with a thickness of 80 µm.

Subsequently, the composite film was cut by using an excimer laser-type precise cutting machine along lengthwise and widthwise directions orthogonally into a cut width of 80 µm (into a 80 µm square), and thus, minute pieces in a square pole shape with a size of 80 µm square were obtained. The obtained minute pieces were introduced into a continuous phase at 80°C to be melted into a spherical shape. Here, the used continuous phase was 0.5 g of polyvinyl alcohol and 2.5 g of tricalcium phosphate dissolved in 100 g of water.

Thereafter, the resultant was cooled, thereby obtaining a two-color composite fine particles having one hemisphere in black and the other hemisphere in white, and having an average particle size of 76 µm and a CV value of 4%. To a slurry of the two-color composite particles, 10 g of methanol was added and the resultant was stirred for 24 hours, and as a result, the white portion and the black portion were peeled off from each other in some of the particles.

### (Example 9)

### [Production of (hydrophilic-hydrophobic) amphipathic fine particles]

As a hydrophobic paste mixture A, 2.5 g of styrene, 2.5 g of polystyrene, 0.1 g of a titanium dioxide (TiO₂) powder of a white pigment, 0.3 g of AIBN (azobisisobutyronitrile) as a polymerization initiator, 10 g of MEK as a solvent, and 0.05 g of Span 80 (sorbitan monooleate) as a surface active agent were used. The paste mixture A was poured into a Petri dish and formed into a film with the solvent dried at 50°C by the cast method, thereby obtaining a hydrophobic sheet A. The sheet A had a thickness of 55 µm.

On the other hand, as a hydrophilic paste mixture B, 5.0 g of hydroxypropyl methylcellulose (Metolose 60SH manufactured by Shin-Etsu Chemical Co., Ltd.), 0.1 g of a magnetite (Fe₃O₄) powder of a black pigment, 10 g of ion-exchanged water as a solvent, and 0.05 g of Span 80 (sorbitan monooleate) as a surface active agent were used. The paste mixture B was poured into a Petri dish and formed into a film with the solvent dried at 70°C by the cast method, thereby obtaining a hydrophilic sheet B. The sheet B had a thickness of 48 µm.

The two films, that is, the sheet A and the sheet B, were adhered to each other, thermal polymerization was performed at 70°C for 60 minutes, and after cooling, the resulting films were pressed at a pressure of 10 kN, thereby preparing a composite film with a thickness of 82 µm.

Subsequently, the composite film was cut by using an excimer laser-type precise cutting machine along lengthwise and widthwise directions orthogonally into a cut width of 80 µm (into a 80 µm square), and thus, minute pieces in a square pole shape with a size of 80 µm square were obtained. The obtained minute pieces were introduced into a continuous phase at 80°C to be melted into a spherical shape. Here, the used continuous phase was 0.5 g of polyvinyl alcohol and 2.5 g of tricalcium phosphate dissolved in 100 g of water.

Thereafter, the resultant was cooled, thereby obtaining a two-color composite fine particles having one hemisphere in black and the other hemisphere in white, and having an average particle size of 78 µm and a CV value of 6%. To a slurry of the two-color composite particles, 10 g of methanol was added and the resultant was stirred for 24 hours; and as a result, the white portion and the black portion were peeled off from each other in none of the particles.

### INDUSTRIAL APPLICABILITY

The present invention can provide a method for producing fine particles in which fine particles having an arbitrarily controllable particle size and having a uniform particle size distribution can be simply obtained with a low environmental load.

Furthermore, the present invention can provide a method for producing composite fine particles having heterogeneous surfaces in which there is high productivity, no restriction in a foreign substance addable for developing functions and the foreign substance can be embraced in each sphere center of the composite fine particles.

## Claims

1. A method for producing fine particles, comprising the step of preparing minute pieces by cutting a resin film at equal intervals into a width of 0.05 to 500 µm.

2. The method for producing fine particles according to claim 1, further comprising the step of melting the minute pieces after the step of preparing minute pieces.

3. The method for producing fine particles according to claim 1 or 2,
wherein the resin film is obtained by applying a paste containing a polymer to a substrate and drying the paste.

4. The method for producing fine particles according to claim 1 or 2,
wherein the resin film is obtained by applying a paste containing a polymerizable monomer to a substrate and then performing a polymerization reaction.

5. The method for producing fine particles according to claim 1, 2, 3 or 4,
wherein the resin film is a composite film having two or more layers.

6. The method for producing fine particles according to claim 5,
wherein the composite film is obtained by applying a paste containing a polymerizable monomer to a substrate resin film and then performing a polymerization reaction.

7. The method for producing fine particles according to claim 5,
wherein the composite film is obtained by applying a paste containing a polymer to a substrate resin film and drying the paste.

8. The method for producing fine particles according to claim 5,
wherein the composite film is obtained by individually preparing two or more layer films and then adhering the layer films to each other.

9. The method for producing fine particles according to claim 8,
wherein the composite film is obtained by preparing two or more layer films composed of one or more layer resin films and one or more precursor films containing a polymerizable monomer, adhering the layer films to each other, and then performing a polymerization reaction.

10. The method for producing fine particles according to claim 9,
wherein the precursor film is obtained by applying a paste containing a polymer, a polymerizable monomer and an organic solvent and then drying the organic solvent.

11. The method for producing fine particles according to claim 9,
wherein the precursor film is obtained by applying a paste containing two different polymerizable monomers and then polymerizing one of the polymerizable monomers.

12. The method for producing fine particles according to claim 8,
wherein the composite film is obtained by preparing two or more layer films composed of one or more layer resin films and one or more solvent-containing films containing an organic solvent, adhering the layer films to each other and then drying the layer films.

13. The method for producing fine particles according to claim 12,
wherein the solvent-containing film is obtained by applying a paste containing a polymerizable monomer and an organic solvent and then performing a polymerization reaction.

14. The method for producing fine particles according to claim 1, 2, 3, 4, 5, 6, 7, 8, 9, 10, 11, 12 or 13,
wherein a core material is disposed at equal intervals on the resin film.

15. The method for producing fine particles according to claim 5, 6, 7, 8, 9, 10, 11, 12, 13 or 14,
wherein the composite film includes a core material disposed at equal intervals between the layers.

16. The method for producing.fine particles according to claim 14 or 15,
wherein the resin film is cut so as to have the core material positioned in a center of each of the minute pieces.
